(19) **Europäisches Patentamt** / **European Patent Office** / **Office européen des brevets**

(11) **EP 4 726 223 A1**

(12) **EUROPEAN PATENT APPLICATION**

(43) Date of publication:
15.04.2026 Bulletin 2026/16

(21) Application number: 24205449.2

(22) Date of filing: 09.10.2024

(51) International Patent Classification (IPC):
**F16B 19/10** *(2006.01)* **F16B 37/06** *(2006.01)*

(52) Cooperative Patent Classification (CPC):
**F16B 19/1036; F16B 37/067**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Newfrey LLC**
**New Britain, CT 06053 (US)**

(72) Inventors:
• **HOFMANN, Lukas**
**35394 Gießen (DE)**

• **LUTZ, Oliver**
**35394 Gießen (DE)**
• **NEUL, Thorsten**
**35394 Gießen (DE)**
• **WISSLING, Matthias**
**35394 Gießen (DE)**
• **BREWER, Jonathan**
**Letchworth Garden City, SG6 1JY (GB)**

(74) Representative: **SBD IPAdmin**
**The Reach**
**Bridge Avenue**
**Maidenhead, Berkshire SL6 1QP (GB)**

(54) **A FASTENER**

(57) Fastener (100) for forming a mechanical seal with a first workpiece (108) comprising:
a fastener body (104) extending along a longitudinal axis (110);
a fastener head (102) extending radially at a first end (114) of the fastener body (104); and
a chamfer sealing portion (106) having a chamfer sealing surface (170) arranged to engage the first workpiece (108), the chamfer sealing portion (106) extending between the fastener head (102) and the fastener body (104);
wherein the chamfer sealing surface (170) is inclined with respect to the longitudinal axis (110) at an angle between 15 degrees and 30 degrees; and
wherein an axial length of the chamfer sealing portion (106) in a direction along the longitudinal axis (110) is between 0.1 mm to 0.4mm.

FIG. 1

EP 4 726 223 A1

## Description

FIELD

The technology relates to the field of fastening systems, specifically to blind rivets, blind rivet nuts or metal inserts used for securing and permanently fastening metal joints in various applications, such as automotive, aerospace, and construction industries.

BACKGROUND

Blind rivets, blind rivet nuts and metal inserts are used to join workpieces or components that are to be in contact with one another. The workpieces or components typically have bores or holes passing through them that are brought into alignment with one another and into which the blind rivet is placed. The workpieces or components are fastened to each other by the blind rivet being deformed when pulling the mandrel arranged in the blind rivet body by a rivet tool. (in the case of blind rivet nuts, these are mainly installed into a single workpiece, while, later on, a top sheet is secured with a mating screw fitting the rivet nut thread. And for threaded inserts, the single workpiece would be relatively thick, with (optionally) a pre-tapped hole to engage the insert; again, a top sheet is secured with a mating screw fitting into the internal thread of the insert.

In some use cases, it is necessary to seal the fastener against the workpiece in order to prevent ingress of water or other fluids. It is known to provide a seal by using a sealing element such as an O-ring, a cured rubber-like polymer, or a plastic washer between the fastener and the workpiece. A problem with this is that the sealing element may perish or be incorrectly installed. This means that the seal between the fastener and the workpiece may become compromised and fluid can leak through the fastener and workpiece.

SUMMARY

Examples of the present disclosure aim to address the aforementioned problems.

According to an aspect of the present disclosure there is a for forming a mechanical seal with a first workpiece comprising:

a fastener body extending along a longitudinal axis;
a fastener head extending radially at a first end of the fastener body; and
a chamfer sealing portion having a chamfer sealing surface arranged to engage the first workpiece, the chamfer sealing portion extending between the fastener head and the fastener body;
wherein the chamfer sealing surface is inclined with respect to the longitudinal axis at an angle between 15 degrees and 30 degrees; and
wherein an axial length of the chamfer sealing portion in a direction along the longitudinal axis is between 0.1 mm to 0.4mm

Such geometry allows a mechanical sealing of the blind fastener without the need of an additional sealing component. The fastener can be manufactured directly with a sealing function.

In an embodiment, the chamfer sealing surface is engaged with the first workpiece end surface and the first workpiece end surface is separated from the fastener body in a direction perpendicular to the longitudinal axis by a distance between 0.025 to 0.20.

In an embodiment, the fastener body comprises a deformable portion axially separated along the longitudinal axis from the chamfer sealing portion and the deformable portion is arranged to deform when compressed axially and exert a force against the workpiece towards the fastener head.

In an embodiment, the fastener is a blind rivet or a blind rivet nut.

In an embodiment, the fastener body is arranged to engage a second workpiece such that the first workpiece is between the second workpiece and the fastener head and the second workpiece is arranged to exert a force against the first workpiece towards the fastener head (when the fastener is fastened to the first workpiece and second workpiece.

In an embodiment, the fastener body comprises a threaded portion arranged to threadedly engage with a threaded hole in the second workpiece.

In an embodiment, the fastener body is arranged to form a push fit with a reciprocal hole in the second workpiece.

In an embodiment, the fastener is a metal insert.

In an embodiment, the outer diameter of the fastener body (104) is between 6 and 25 millimeters.

In an embodiment, the chamfer sealing portion tapers from a first radius adjacent to the fastener head to a second radius equal to an outer radius of the fastener body.

In an embodiment, the chamfer sealing portion tapers from a first radius adjacent to the fastener head to a second radius greater than an outer radius of the fastener body.

In an embodiment, the radius of the chamfer sealing portion varies linearly from the first radius to the second radius.

In an embodiment, the first workpiece comprises a stepped portion arranged to receive the fastener and the height of the stepped portion is greater than the axial length of the chamfer sealing portion in a direction along the longitudinal axis.

In an embodiment, the fastener and the first workpiece are made from the same material.

In an embodiment, the fastener head is arranged to engage a surface of first workpiece when the chamfer sealing surface engages the first workpiece.

In an embodiment, the chamfer sealing surface is arranged to create a water-tight seal with the first workpiece when the fastener is fastened to the first workpiece.

BRIEF DESCRIPTION OF THE DRAWINGS

Various other aspects and further examples are also described in the following detailed description and in the attached claims with reference to the accompanying drawings, in which:

> Figure 1 shows a side cross-sectional view of a fastener according to some examples;
> Figure 2 shows a close-up side cross-sectional view of a fastener according to some examples;
> Figure 3 shows a close-up side cross-sectional view of a fastener engaging a workpiece according to some examples;
> Figure 4 shows a close-up side cross-sectional view of a fastener engaging a workpiece according to some examples;
> Figure 5 shows a close-up side cross-sectional view of a fastener and workpiece illustrating dimensions according to some examples; and
> Figure 6 shows a close-up side cross-sectional view of a fastener and workpiece illustrating dimensions according to some examples.

DETAILED DESCRIPTION

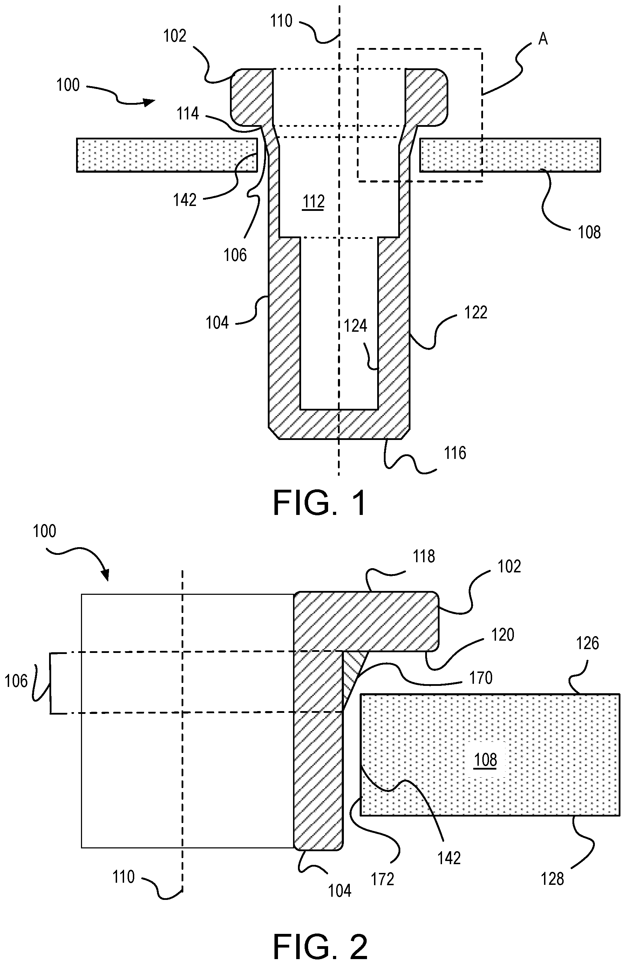

Figure 1 shows a side cross-sectional view of a fastener 100. The fastener comprises a fastener head 102 connected to a fastener body 104. The fastener 100 extends along a longitudinal axis 110. The fastener body 104 comprises a hollow shank comprising a first end 114 and the fastener body 104 extends along the longitudinal axis 110 to a second end 116.

The fastener 100 as shown in Figure 1 is a blind rivet nut. In other examples, the fastener 100 can be other suitable types of fastener 100 such as a blind rivet, a closed metal insert or an open metal insert. The fastener 100 can be any suitable fastener 100 for fixing workpieces together. Figure 1 shows the fastener 100 inserted into a first workpiece hole 142 of a first workpiece 108.

The fastener 100 as shown in Figure 1 has not been set in the first workpiece 108. The fastener 100 comprises a chamfer sealing portion 106 between the fastener head 102 and the fastener body 104. The fastener 100 is arranged to mechanically engage the first workpiece 108 when set in the first workpiece 108. In particular, the chamfer sealing portion 106 is arranged to engage the first workpiece 108 when set.

As it will be discussed in further detail below, the chamfer sealing portion 106 comprises a specific geometry between the fastener head 102 and the fastener body 104 which gives rise to a mechanical sealing between the fastener 100 and the first workpiece 108. In particular, the geometry and arrangement of the chamfer sealing portion 106 means that the tightness between the fastener 100 and the first workpiece 108 results in a mechanical fit that provides a watertight seal. This means that additional sealing elements such as a plastic or rubber O-ring or another plastic insert are not needed. Accordingly, by providing a mechanical seal with the chamfer sealing portion 106, the fastener 100 can be manufactured in a single step with a single component. This means that the fastener 100 is more reliable and easier to install.

For example, a user does not need to arrange an additional component such as an O-ring on the fastener 100 before installation. Furthermore, the user does not need to ensure that the O-ring is correctly installed. Neither does the user need to be worried about the O-ring deteriorating over time. Accordingly, the fastener 100 is more reliable when used on a first workpiece 108 where the user has sealing requirements.

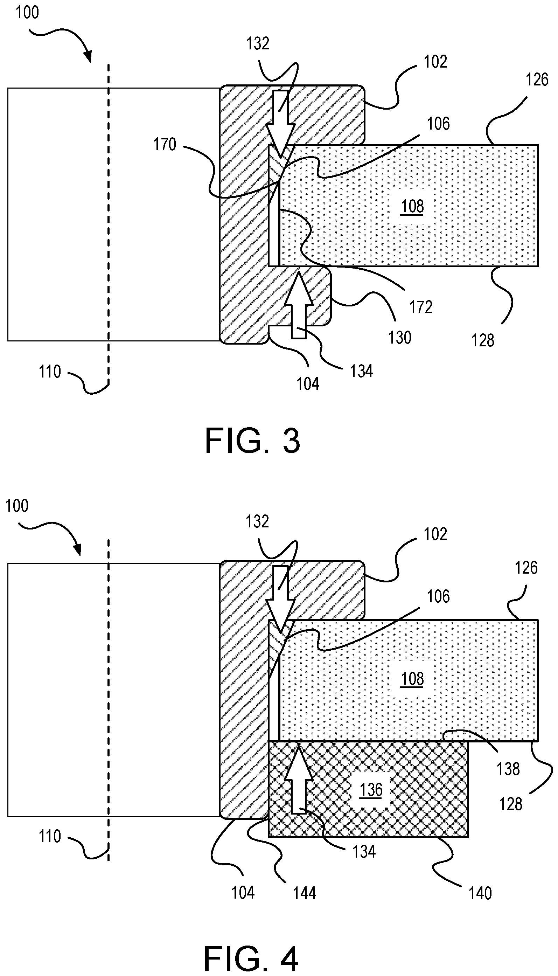

The fastener head 102, as shown in Figure 1, extends radially in a direction perpendicular to the longitudinal axis 110. The fastener body 104 is configured to deform when placed under an axial force in a direction along the longitudinal axis 110. The deformable portion 130 of the fastener body 104 will be discussed in more detail with reference to Figure 3 below. Turning back to Figure 1, the fastener body 104 comprises a body outer surface 122 and an inner surface 124. The fastener 100 in this instance is a blind rivet nut and has a fastener cavity 112. (Note, the cavity 112 shown has two diameters and a tapered transition, but for all our current designs the cavity has a simple parallel bore of just one diameter.)

As mentioned above, the fastener 100 can be different types of fastener, e.g. an externally threaded metal insert, a press-fit metal insert, a blind rivet nut, or a blind rivet.

A metal insert is typically installed by drilling a first workpiece hole 142 into the first workpiece 108 and then pressing or screwing the metal insert into place. Accordingly, in some examples, the body outer surface 122 may comprise a threaded portion (not shown) for threadedly engaging with a reciprocal threaded hole in the first workpiece 108.

Alternatively, the body outer surface 122 is configured to form a press fit with the first workpiece hole 142. In this way, the metal insert is fixed with respect to the first workpiece 108 either by a threaded engagement or a press fit engagement.

On the other hand, the fastener 100 in some other examples can be a blind rivet nut (e.g. as shown in Figure 1). In this case, the fastener 100 is inserted into a first workpiece hole 142, e.g. as shown in figure 1. The first workpiece hole 142 is typically pre-drilled and then a specialised fastener tool is used to pull a mandrel (not shown). The mandrel, when pulled, exerts an axial force in a direction parallel with the longitudinal axis 110 and causes a portion of the fastener body 104 to deform. The deformation of the fastener body 104 creates a secure connection between the fastener 100 and the first workpiece 108. In another example, the fastener 100 is a blind rivet, which deforms in a similar way to the blind rivet nut. In this case, the sleeve of the blind rivet (not shown) comprises the chamfer sealing portion 106.

The fastener 100 will now be described in more detail with reference to Figure 2. Figure 2 shows a close-up side cross-sectional view of the fastener 100. Figure 2 represents the view as indicated by the dotted box labelled A in Figure 1. Figure 2 shows the first workpiece 108 adjacent to the fastener 100. Here the fastener 100 has not been set in the first workpiece 108 and the chamfer sealing portion 106 has not yet engaged the first workpiece 108.

The region of the fastener 100 corresponding to the chamfer sealing portion 106 is indicated by dotted lines. The chamfer sealing portion 106 is denoted in Figure 2 with a different shading pattern. However, the chamfer sealing portion 106 is integral with the fastener 100. Accordingly, the chamfer sealing portion 106 is connected to both the fastener head 102 and the fastener body 104.

In some examples, the fastener 100 is cast or formed in the same manufacturing process and the fastener head 102, the fastener body 104 and the chamfer sealing portion 106 are all formed at the same time. The fastener 100 as shown in Figure 2 only shows a portion of the fastener body 104. The first workpiece 108 comprises a first workpiece upper surface 126 and a first workpiece lower surface 128. The first workpiece upper surface 126 is on an opposite side of the first workpiece 108 to the first workpiece lower surface 128. In some examples, the first workpiece 108 can be any suitable workpiece that requires a fastener 100. For example, the first workpiece 108 can be a panel of a vehicle or an industrial machine or a structure etc.

The first workpiece 108 as shown in Figure 2 also comprises a first workpiece end surface 172. The first workpiece end surface 172 is an internal surface of the first workpiece hole 142 that faces the body outer surface 122 of the fastener body 104. In some examples, the first workpiece end (or inner) surface 172 engages the chamfer sealing portion 106 when the fastener 100 is set in the first workpiece 108. Figure 2 shows only one side of the fastener 100 but the chamfer sealing portion 106 extends circumferentially around the entire fastener 100.

The fastener head 102 comprises a head top surface 118 which faces away from the first workpiece 108 when the fastener 100 is inserted into the first workpiece hole 142. The fastener head 102 also comprises a head lower surface 120 which faces towards the first workpiece upper surface 126. When the fastener 100 is in engagement with the first workpiece 108, the head lower surface 120 engages the first workpiece upper surface 126. This can be seen in more detail in Figure 3.

Turning to Figure 3, the fastener 100 will now be described in more detail. Figure 3 shows a close-up side cross-sectional view of the fastener 100 engaging the first workpiece 108. The arrangement as shown in figure 3 is the same as shown in figure 2, except that the fastener 100 is now set and fixed to the first workpiece 108.

As mentioned above, the fastener 100 can be a blind rivet nut. In this case, the fastener body 104 has deformed due to a force being applied to the fastener 100 in an axial direction parallel to the longitudinal axis 110. Accordingly, the deformable portion 130 of the fastener body 104 has formed a bulb and the deformable portion 130 engages the first workpiece lower surface 128. When the fastener 100 has been fastened to the first workpiece 108 in the first workpiece hole 142, the fastener 100 exerts a first engaging force 132 and a second engaging force 134.

The first engaging force 132 is opposite in direction to the second engaging force 134. The fastener head 102 exerts the first engaging force 132 in a direction towards the first workpiece upper surface 126 in a direction parallel to the longitudinal axis 110. The deformable portion 130 exerts the second engaging force 134 in a direction towards the first workpiece lower surface 128 in a direction parallel to the longitudinal axis 110. Accordingly, the fastener 100 squeezes the first workpiece 108 between the fastener head 102 and the deformable portion 130.

Since the fastener 100 exerts the first engaging force 132 and the second engaging force 134, the first workpiece 108 is urged towards the chamfer sealing portion 106. Accordingly, the first workpiece upper surface 126 engages the head lower surface 120. At the same time, the first workpiece end surface 172 engages the chamfer sealing portion 106 and the chamfer sealing surface 170.

When the fastener 100 is fastened to the first workpiece 108 as shown in Figure 3, the geometry of the chamfer sealing portion 106 surprisingly provides a superior mechanical sealing function. The inventors have realised that the specific geometry as discussed below results in a surprisingly good watertight fit between the fastener 100 and the first workpiece 108. For example, the first workpiece upper surface 126 can be exposed to water or other liquids and the fastener 100 is set with sufficient tightness against the first workpiece 108 due to the chamfer sealing portion 106 that the liquid or water does not travel through first workpiece hole 142 first workpiece lower surface 128. In other words, the fastener 100 with the chamfer sealing portion 106 is able to plug the first workpiece hole 142 and seal the first workpiece hole 142. This means that the fastener 100 is particularly good for fasteners used in sealing applications.

Turning to Figure 4, another example of the fastener 100 will now be described. The fastener 100 as shown in Figure 4 is a metal insert as opposed to a blind rivet nut. Figure 4 shows a close-up side cross-sectional view of the fastener 100 engaged in a first workpiece 108 and a second workpiece 136.

As mentioned above, the fastener body 104 is engaged with a second workpiece 136. For example, Figure 4 shows the body outer surface 122 of the fastener body 104 in a press-fit engagement with a second workpiece hole 144. Alternatively, the fastener body 104 can be in threaded engagement with the second workpiece 136. For example, the fastener 100 can screw into the second workpiece hole 144 by virtue of a threaded engagement there between. This means that the fastener 100 can be fixed to the second workpiece 136. Similar to the arrangement as shown in Figure 3, the fastener 100 exerts a first engaging force 132 and a second engaging force 134 on the first workpiece 108. The first engaging force 132 is opposite in direction to the second engaging force 134. The fastener head 102 exerts the first engaging force 132 in a direction towards the first workpiece upper surface 126 in a direction parallel to the longitudinal axis 110. The second workpiece 136 exerts the second engaging force 134 in a direction towards the first workpiece lower surface 128 in a direction parallel to the longitudinal axis 110. Similar to the arrangement as shown in Figure 3, the first workpiece 108 is urged against the chamfer sealing portion 106 and the fastener head 102. In this way, the second workpiece 136 performs a similar function to the deformable portion 130 as shown in Figure 3.

Whilst not shown in Figure 3 or 4, additional workpieces can be fastened to the first workpiece 108 with the fastener 100. For example, another workpiece not shown can be placed adjacent to the first workpiece 108 as shown in Figure 3 to fasten the first workpiece 108 to another workpiece. This means that the fastener 100 can fasten a plurality of workpieces together and provide a sealing function.

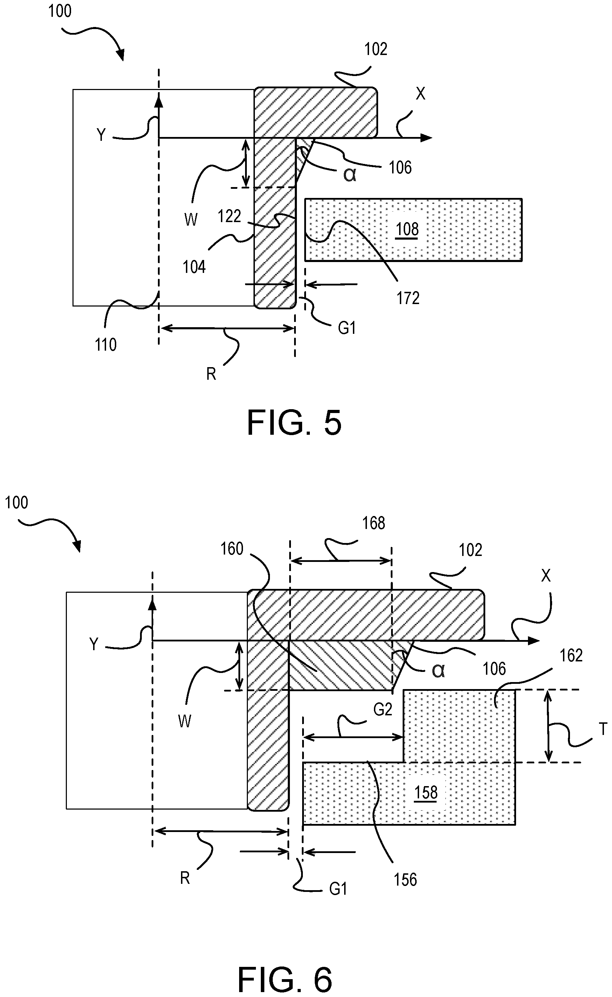

The fastener 100 will now be discussed in more detail with respect to Figure 5. Figure 5 shows a close-up side cross-sectional view of the fastener 100 illustrating various dimensions thereof. The fastener body 104 extends in a direction parallel with the longitudinal axis 110. The longitudinal axis 110 as shown in Figure 5 is the centre of the fastener 100. The fastener 100 is genuinely cylindrical in shape and the fastener body 104 comprises a radius R. The radius R extends from the longitudinal axis 110 to the body outer surface 122.

The chamfer sealing portion 106 extends in a direction parallel with the longitudinal axis 110. The axial length W of the chamfer sealing portion 106 is shown in Figure 5. In addition, the chamfer sealing portion 106 is inclined to the longitudinal axis 110. The chamfer portion angle, otherwise known as the angle of inclination of the chamfer sealing surface 170 is indicated by $\alpha$ in Figure 5.

Accordingly, the chamfer sealing portion 106 tapers from a first radius adjacent to the fastener head 102 to a second radius equal to the radius R of the fastener body 104.

The first workpiece 108 is shown in Figure 5 as being separated in a direction perpendicular to the longitudinal axis 110. Accordingly, the first workpiece end surface 172 is separated by a first workpiece separation distance G1 from the body outer surface 122.

In some examples, the chamfer portion angle $\alpha$ is between 15 degrees and 30 degrees. In some examples, the chamfer portion angle $\alpha$ is 15 degrees, 16 degrees, 17 degrees, 18 degrees, 19 degrees, 20 degrees, 21 degrees, 22 degrees, 23 degrees, 24 degrees, 25 degrees, 26 degrees, 27 degrees, 28 degrees, 29 degrees or 30 degrees.

In some examples the chamfer portion axial length W is between 0.4 mm and 1 mm. In some examples the chamfer portion axial length W is 0.4 mm, 0.45 mm, 0.7 mm, 0.75 mm, 0.8 mm, 0.85 mm, 0.9 mm, 0.95 mm, or 1 mm.

In some examples, the first workpiece separation distance G1, is between 0.05mm and 0.1mm. The first workpiece separation distance G1, is the separation distance when the first workpiece 108, is fastened to the fastener.

In some examples the radius R of the fastener body 104 can be between 10 mm and 20 mm.

In some examples the chamfer sealing surface 170 is flat. That is the radius of the chamfer sealing portion 106 varies linearly from a first radius adjacent to the fastener head 102 to a second radius equal to the radius of the fastener body 104 at the body outer surface 122.

As shown in Figure 5, a first axis Y and a second axis X are shown. The first axis Y represents an axial position with respect to the fastener 100 in a direction parallel with the longitudinal axis 110. The second axis X represents a position in a direction perpendicular to the longitudinal axis 110. Accordingly, the chamfer sealing surface 170 of the chamfered sealing portion 106 can be defined by equation (1).

$$(1) \qquad Y = \frac{1}{\tan(\alpha)}X - \left(W + \frac{D}{2\tan(\alpha)}\right)$$

Since the fastener 100 is cylindrical, the equation (1) (or for equation (2) discussed below) will be true for the chamfer sealing portion 106 at any point circumferentially around the fastener 100.

Reference will now be made to Figure 6, which shows a close-up side cross-sectional view of the fastener and a third workpiece 158, illustrating dimensions thereof.

As shown in Figure 6, the fastener 100 comprises the chamfer sealing portion 106, except that the chamfer sealing portion 106 is formed on a sealing stepped portion 160. The sealing stepped portion 160 protrudes radially from the fastener body 104. This is so that the fastener 100 can fit in a reciprocal third workpiece recess 156 in the third workpiece 158. Specifically, the third workpiece 158 comprises a hole with a stepped portion. As can be seen from Figure 6, the third workpiece 158 comprises a third workpiece stepped portion 162, which defines the third workpiece recess 156. The third workpiece recess 156 has a third workpiece recess width G2. The sealing stepped portion 160 accordingly fits into the reciprocal third workpiece recess 156.

The sealing step portion 160 has a sealing step portion width 168 as shown in Figure 6. The sealing step portion width 168 is the same as the third workpiece recess width G2. The third workpiece stepped portion 162 projects in a direction parallel with the longitudinal axis 110 when the fastener 100 is inserted into the third workpiece 158. Accordingly, the third workpiece stepped portion 162 projects in a direction parallel to the longitudinal axis 110 by a third workpiece stepped portion height T.

The third workpiece stepped portion height T is greater than the chamfer portion axial length W. This means that when the fastener 100 is inserted into the third workpiece 158, the third workpiece step portion 162 engages the chamfer sealing portion 106. The other parameters of the fastener 100, e.g. the chamfer portion axial length W and the chamfer portion angle α remain the same as discussed with respect to Figure 5.

Similar to the arrangement as shown in Figure 5, the chamfer sealing portion 106 can also be described with an equation. Accordingly, the chamfer sealing surface 170 of the chamfered sealing portion 106 as shown in Figure 6 can be defined by equation (2).

$$(2) \qquad Y = \frac{1}{\tan(\alpha)}(X - G2) - \left(W + \frac{D}{2\tan(\alpha)}\right)$$

In some examples, the material of the fastener 100 and the first workpiece 108 are the same. For example, both the fastener 100 and the first workpiece 108 are made of aluminium. Furthermore, the fastener 100, the second workpiece 136 and the third workpiece 158 are the same material e.g. aluminium. This means that when the fastener 100 has been fastened to the first workpiece 108, the fastener 100 is better resistant to heat. For example, the chamfer sealing portion 106 expands and contracts at the same rate as the first workpiece 108 and therefore the chamfer sealing portion 106 keeps the mechanical sealing with the first workpiece 108.

In another example, two or more examples are combined. Features of one example can be combined with features of other examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A fastener (100) for forming a mechanical seal with a first workpiece (108) comprising:

   a fastener body (104) extending along a longitudinal axis (110);
   a fastener head (102) extending radially at a first end (114) of the fastener body (104); and
   a chamfer sealing portion (106) having a chamfer sealing surface (170) arranged to engage the first workpiece (108), the chamfer sealing portion (106) extending between the fastener head (102) and the fastener body (104);
   wherein the chamfer sealing surface (170) is inclined with respect to the longitudinal axis (110) at an angle between 15 degrees and 30 degrees; and
   wherein an axial length of the chamfer sealing portion (106) in a direction along the longitudinal axis (110) is between 0.1 mm to 0.4mm.

2. The fastener (100) according to claim 1 wherein when the chamfer sealing surface (170) is engaged with the first workpiece end surface (172) and the first workpiece end surface (172) is separated from the fastener body (104) in a direction perpendicular to the longitudinal axis (110) by a distance between 0.025 to 0.20.

3. The fastener (100) according to claims 1 or 2 wherein the fastener body (104) comprises a deformable portion (130) axially separated along the longitudinal axis (110) from the chamfer sealing portion (106) and the deformable portion (130) is arranged to deform when compressed axially and exert a force against the workpiece towards the fastener head (102).

4. The fastener (100) according to any of claims 1 to 3 wherein the fastener (100) is a blind rivet or a blind rivet nut.

5. The fastener (100) according to claims 1 or 2 wherein the fastener body (104) is arranged to engage a second workpiece (136) such that the first workpiece (108) is between the second workpiece (136) and the fastener head (102) and the second workpiece (136) is arranged to exert a force against the first workpiece (108) towards the fastener head (102) when the fastener (100) is fastened to the first workpiece (108) and second workpiece (136).

6. The fastener (100) according to claim 5 wherein the fastener body (104) comprises a threaded portion arranged to threadedly engage with a threaded hole in the second workpiece (136).

7. The fastener (100) according to claim 5 wherein the fastener body (104) is arranged to form a push fit with a reciprocal hole in the second workpiece (136).

8. The fastener (100) according to any of claims 5 to 7 wherein the fastener (100) is a metal insert.

9. The fastener (100) according to any of claims 1 to 8 wherein the outer diameter of the fastener body (104) is between 6 and 25 millimeters.

10. The fastener (100) according to any of the preceding claims wherein the chamfer sealing portion (106) tapers from a first radius adjacent to the fastener head (102) to a second radius equal to an outer radius of the fastener body (104).

11. The fastener (100) according to any of claims 1 to 9 wherein the chamfer sealing portion (106) tapers from a first radius adjacent to the fastener head (102) to a second radius greater than an outer radius of the fastener body (104).

12. The fastener (100) according to claims 10 or 11 wherein the radius of the chamfer sealing portion (106) varies linearly from the first radius to the second radius.

13. The fastener (100) according to claims 11 or 12 wherein the first workpiece (108) comprises a stepped portion arranged to receive the fastener (100) and the height of the stepped portion is greater than the axial length of the chamfer sealing portion (106) in a direction along the longitudinal axis (110).

14. The fastener (100) according to any of the preceding claims wherein the fastener (100) and the first workpiece (108) are made from the same material.

15. The fastener (100) according to any of the preceding claims wherein the fastener head (102) is arranged to engage a surface of first workpiece (108) when the chamfer sealing surface (170) engages the first workpiece (108).

16. The fastener (100) according to any of the preceding claims wherein the chamfer sealing surface (170) is arranged to create a water-tight seal with the first workpiece (108) when the fastener (100) is fastened to the first workpiece (108).

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

**Application Number**

EP 24 20 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 493 141 A (KREZAK JOHN E [US]) 15 January 1985 (1985-01-15) * the whole document * ----- | 1-16 | INV. F16B19/10 F16B37/06 |
| A | EP 2 916 016 B1 (NEWFREY LLC [US]) 26 July 2017 (2017-07-26) * the whole document * ----- | 1 | |
| A | US 2005/220565 A1 (HOMMEL GUNTER [DE]) 6 October 2005 (2005-10-06) * the whole document * ----- | 1 | |

| | |
|---|---|
| | **TECHNICAL FIELDS SEARCHED (IPC)** |
| | F16B |

The present search report has been drawn up for all claims

| Place of search | Date of completion of the search | Examiner |
|---|---|---|
| Munich | 13 March 2025 | Pirog, Pawel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                            

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 5449

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| US 4493141 | A | 15-01-1985 | NONE | | |
| EP 2916016 | B1 | 26-07-2017 | CN | 104736860 A | 24-06-2015 |
| | | | EP | 2916016 A1 | 09-09-2015 |
| | | | JP | 6048733 B2 | 21-12-2016 |
| | | | JP | 2015178837 A | 08-10-2015 |
| | | | TW | 201432161 A | 16-08-2014 |
| | | | US | 2015192161 A1 | 09-07-2015 |
| | | | WO | 2014069166 A1 | 08-05-2014 |
| US 2005220565 | A1 | 06-10-2005 | CN | 1662749 A | 31-08-2005 |
| | | | DE | 10314948 A1 | 18-11-2004 |
| | | | EP | 1514031 A1 | 16-03-2005 |
| | | | JP | 2005530106 A | 06-10-2005 |
| | | | US | 2005220565 A1 | 06-10-2005 |
| | | | US | 2006210376 A1 | 21-09-2006 |
| | | | WO | 03106850 A1 | 24-12-2003 |

EPO FORM P0459

For more details about this annex : see Official Journal of the European Patent Office, No. 12/82